(19) Europäisches Patentamt
European Patent Office
Office européen des brevets

(11) EP 1 390 375 B1

# (12) EUROPEAN PATENT SPECIFICATION

(45) Date of publication and mention of the grant of the patent:
**19.11.2008 Bulletin 2008/47**

(21) Application number: **02719511.4**

(22) Date of filing: **11.04.2002**

(51) Int Cl.:
***C07F 17/02*** *(2006.01)* ***C23C 16/00*** *(2006.01)*

(86) International application number:
**PCT/US2002/011834**

(87) International publication number:
**WO 2002/088153 (07.11.2002 Gazette 2002/45)**

## (54) SYNTHESIS OF BIS (CYCLOPENDADIENYL) AND BIS (INDENYL) RUTHENIUM COMPLEXES

SYNTHESE VON BIS(CYCLOPENTADIENYL)- UND BIS(INDENYL)-RUTHENIUM-KOMPLEXEN

SYNTHESE DE COMPLEXES DE RUTHENIUM BIS(CYCLOPENTADIENYLE) ET BIS(INDENYLE)

(84) Designated Contracting States:
**AT BE CH CY DE DK ES FI FR GB GR IE IT LI LU MC NL PT SE TR**

(30) Priority: **30.04.2001 US 845627**
**24.08.2001 US 938952**

(43) Date of publication of application:
**25.02.2004 Bulletin 2004/09**

(73) Proprietor: **BOULDER SCIENTIFIC COMPANY**
**Mead, CO 80542 (US)**

(72) Inventors:
- **BARCLAY, Voll Karin A.**
  **Boulder, CO 80303 (US)**
- **SULLIVAN, Jeffrey, M.**
  **Loveland, CO 80537 (US)**
- **ARKIN, Dawn, A.**
  **Longmont, CO 80501 (US)**
- **ASKHAM, Fredric, R.**
  **Loveland, CO 80537 (US)**

(74) Representative: **Marchant, James Ian**
**Elkington and Fife LLP**
**Prospect House**
**8 Pembroke Road**
**Sevenoaks, Kent TN13 1XR (GB)**

(56) References cited:
**EP-A2- 0 086 457**
**WO-A-02/088152**
**US-A- 2 912 449**
**US-A- 3 306 917**
**US-A- 4 992 305**
**US-A- 6 002 036**
**US-B1- 6 207 232**

- **BOGDANOVIC B: "MAGNESIUM ANTHRACENE SYSTEMS AND THEIR APPLICATION IN SYNTHESIS ANDCATALYSIS" ACCOUNTS OF CHEMICAL RESEARCH, vol. 21, 1988, pages 261-267, XP002041372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 390 375 B1

**Description**

## FIELD OF THE INVENTION

This invention relates to bis (cyclopentadienyl) and bis (indenyl) ruthenium complexes which are useful in chemical vapor deposition (CVD) procedures.

## BACKGROUND OF THE INVENTION

The state of the art relevant to this invention as of July 17, 1997 is summarized in United States patent 6,002,036. A process for the synthesis of bis(alkylcyclopentadienyl) ruthenium complexes by treatment of $RuCl_3$ hydrates and ethylcyclopentadiene or isopropylcyclopentadiene with zinc powder in an alcohol solvent at -30°C to 0°C is described.

EP-A-86457 describes the reduction of Ru(III) by magnesium which has been exposed to anthracene.

## SUMMARY OF THE INVENTION

The invention comprises synthesis of bis(alkylcyclopentadienyl) ruthenium complexes by treating ruthenium trichloride hydrate and a cyclopentadienyl compound or an indenyl compound with magnesium powder in $C_2$ to $C_8$ alkanol, preferably ethanol, at a temperature of -30°C to 0°C.

A product of 99% purity may be isolated in yields of at least 65% by crystallization from an alkane.

DEFINITIONS

As used in this specification, the following terms have the meaning set forth:

(1) Cyclopentadienyl Compound - A compound of the formula

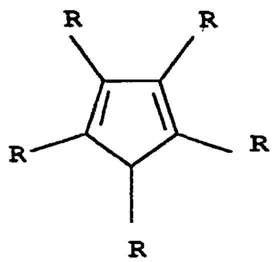

in which each R is independently hydrogen or a $C_1$ to $C_{10}$ alkyl group. Monoalkyl, preferably $C_1$ to $C_5$ monoalkyl, cyclopentadienyl compounds are preferred.

(2) Indenyl Compound - A compound of formula

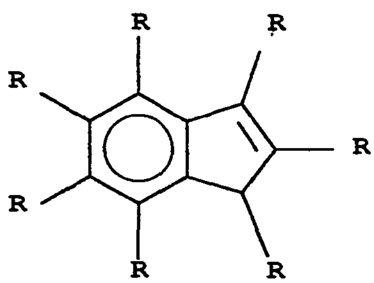

in which each R is independently hydrogen or a $C_1$ to $C_{10}$ alkyl group. Monoalkyl indenyl compounds are preferred.

## DETAILED DESCRIPTION OF THE INVENTION

Ruthenium trichloride dihydrate and a cyclopentadienyl compound or an indenyl compound and an alkanol, preferably ethanol, are combined and treated with magnesium powder, preferably 50 to 200 mesh, at low temperatures with an appropriate stir out. A bis(cyclopentadienyl) or bis(indenyl) ruthenecene may be isolated by filtration, followed by combination with an alkane solvent, preferably hexane, another filtration, and subsequent passage through a silica column. The final product may be isolated in >99% purity by crystallization from a $C_2$ to $C_8$ alkane solvent. Alternatively, a high purity product may be isolated by fractional crystallization.

## EXAMPLE 1

Ruthenium trichloride dihydrate is dissolved in ethanol. The solution is cooled to -20°C to -30°C, and 4.0 to 4.4 equivalents of ethylcyclopentadiene (EtCp) are added. Over the course of 1 hr to 1.5 hr, magnesium powder (100 mesh) (3.0 equivalents) is added, and maintaining a temperature of -10°C to -30°C. The consequent reaction mixture is stirred out for about 19 hours at 10-15°C, or until gas chromatography analysis indicates that the reaction is complete. Thereafter, the reaction mixture is filtered, and the ethanol and unreacted ethyl cyclopentadiene are removed under vacuum. Hexane and 3.0 equivalents of $Na_2SO_4$ are added to the remaining slurry which is then stirred for 1-20 hrs. The solids are removed by filtration through Celite. The remaining yellow solution is distilled under vacuum to an oil. Hexane is added back to the oil, followed by a filtration through Celite® or silica. A final run through a silica column may be appropriate to remove any color bodies.

Hexane is stripped from the yellow solution so produced. Pentane is added to the residual oil, and the product, $(EtCp)_2Ru$, is crystallized at -30°C. After removal of the supernatant, the pentane is then pumped off under vacuum. More than one crystallization may be appropriate to enhance purity. The yellow oil can be isolated in >99% purity with yields of 65%. This synthesis is illustrated by equation 1:

$$4.4\ \mathrm{EtCp} + \mathrm{RuCl_3 \cdot 2H_2O} \xrightarrow[\text{3.0 Mg Powder}]{\text{10° to 30°C EtOH}} \mathrm{(EtCp)_2Ru}$$

| | | | |
|---|---|---|---|
| 94 g/mol | 243.5 g/mol | 24.3 g/mol | 288 g/mol |
| 4.576 mol | 1.04 mol | 3.12 mol | 1.04 mol |
| 430 g | 253.2 g | 75.8 g | 300 g |

Equation 1

Any cyclopentadienyl or any indenyl compound as defined herein may be substituted for ethylcyclopentadiene in Example 1.

Magnesium powder of any desired mesh size, preferably 50 to 200 mesh, may be used. Any $C_2$ to $C_8$ alkanol may be used instead of ethanol.

## EXAMPLE 2

A magnesium slurry was produced by adding 45.62g of 100 mesh magnesium powder (made by READE) (1.88 moles) slowly to a 5 liter vessel containing 1.2L of ethanol (Filmex) at room temperature (25°C). 323.00g of 76.8% pure cyclopentadiene (3.75 moles) at a temperature of about -50°C was added to the magnesium slurry, which was at room temperature, through an addition funnel. To this, a 0.35M solution of $RuCl_3{*}1.8H_2O$ in ethanol (Filmex) (0.625 moles in 1.8L of ethanol) was added over a 2.5 hour time period, via addition funnel, between -10°C and 10°C. The slurry turned from a grey color to brown to green to blue, and then back to grey/brown with each addition of ruthenium trichloride. The mixture was then stirred at a temperature of from 5°C to 10°C for 3 hours, and was then stirred out to room temperature overnight. The ethanol was then distilled off under rough pump, and toluene was added back to remove all of the ethanol. When most of the ethanol was removed, the distillation was switched from rough pump to atomospheric pressure to prevent the product from foaming over into the receiver. When all of the ethanol was removed, the pot temperature was at 110°C. The yellow solution was hot filtered (100°C) through a cake of Celite® that had been washed with hot toluene (100°C). The filtrate was concentrated by distilling off the toluene to 650ml, and the product crystallized out of the toluene solution as it cooled to room temperature. The yellow slurry was further cooled in a dry ice/acetone bath, and the light

yellow crystalline solids were filtered onto a Buchner funnel, washed with 100ml of hexane, and pumped dry giving 134.3g of product (93% yield from first crop).

## Claims

1. A process for producing a cyclopentadienyl or an indenyl ruthenecene complex which comprises treating a cyclopentadienyl or an indenyl compound with ruthenium trichloride hydrate and magnesium powder, in the presence of a $C_2$ to $C_8$ alkanol.

2. The process of claim 1 wherein said treating takes place at a temperature of 0°C to -30°C.

3. The process of claim 1 or 2 wherein said alkanol is ethanol.

4. The process of any of claims 1 to 3 wherein the mesh size of said magnesium powder is from about 50 mesh to about 200 mesh.

5. The process which comprises:

   (i) treating a $C_2$ to $C_5$ monoalkyl cyclopentadiene with ruthenium trichloride hydrate and magnesium powder, wherein said,treating is accomplished in the presence of ethanol and
   wherein said treating takes place at a temperature of 0°C and -30°C to produce a first reaction mixture;
   (ii) agitating said first reaction mixture at about 10°C and 15°C for a time period appropriate to complete the reaction
   wherein a second reaction mixture comprising a slurry of $C_2$ to $C_5$ ruthenecene is produced;
   (iii) filtering said second reaction mixture to provide a cake comprising a $C_2$ to $C_5$ ruthenecene; and
   (iv) recrystallizing said $C_2$ to $C_5$ ruthenecene present in said cake

   wherein a purified $C_2$ to $C_5$ ruthenecene product is obtained.

6. The process of claim 5 wherein said $C_2$ to $C_5$ monoalkyl cyclopentadiene of step (i) is ethyl cyclopentadiene and wherein said $C_2$ to $C_5$ ruthenecene of steps (ii), (iii) and (iv) is ethyl ruthenecene.

## Patentansprüche

1. Verfahren zum Herstellen eines Cyclopentadienyl- oder eines Indenylruthenocen-Komplexes, welches das Behandeln einer Cyclopentadienyl- oder einer Indenylverbindung mit Rutheniumtrichlorid-Hydrat und Magnesiumpulver in Gegenwart eines $C_2$- bis $C_8$-Alkanols umfasst.

2. Verfahren nach Anspruch 1, wobei das Behandeln bei einer Temperatur von 0°C bis -30°C stattfindet.

3. Verfahren nach Anspruch 1 oder 2, wobei das Alkanol Ethanol ist.

4. Verfahren nach einem der Ansprüche 1 bis 3, wobei die Maschenweite bzw. Mesh-Größe des Magnesiumpulvers von etwa 50 Mesh bis etwa 200 Mesh beträgt.

5. Verfahren, welches umfasst:

   (i) Behandeln eines $C_2$- bis $C_5$-Monoalkylcyclopentadiens mit Rutheniumtrichlorid-Hydrat und Magnesiumpulver,
   wobei das Behandeln in Gegenwart von Ethanol durchgeführt wird und
   wobei das Behandeln bei einer Temperatur von 0°C und -30°C stattfindet, um ein erstes Reaktionsgemisch herzustellen;
   (ii) Umwälzen des ersten Reaktionsgemisches bei etwa 10°C und 15°C für eine Zeitdauer, die geeignet ist, um die Reaktion zu vervollständigen,
   wobei ein zweites Reaktionsgemisch, umfassend eine Aufschlämmung von $C_2$- bis $C_5$-Ruthenocen, hergestellt wird;

(iii) Filtrieren des zweiten Reaktionsgemisches, um einen Filterkuchen, umfassend ein $C_2$- bis $C_5$-Ruthenocen bereitzustellen und
(iv) Umkristallisieren des $C_2$- bis $C_5$-Ruthenocens, das in dem Filterkuchen vorhanden ist,

wobei ein gereinigtes $C_2$- bis $C_5$-Ruthenocen-Produkt erhalten wird.

**6.** Verfahren nach Anspruch 5, wobei das $C_2$- bis $C_5$-Monoalkylcyclopentadien aus Stufe (i) Ethylcyclopentadien ist und wobei das $C_2$- bis $C_5$-Ruthenocen aus den Stufen (ii), (iii) und (iv) Ethylruthenocen ist.

**Revendications**

**1.** Procédé pour la production d'un complexe de cyclopentadiényl ruthénocène ou d'un complexe indényl ruthénocène, qui comprend le traitement d'un composé cyclopentadiényle ou d'un composé indényle avec du trichlorure de ruthénium hydraté et du magnésium pulvérulent, en présence d'un alcanol en $C_2$-$C_8$.

**2.** Procédé selon la revendication 1, dans lequel ledit traitement a lieu à une température de 0 °C à -30 °C.

**3.** Procédé selon la revendication 1 ou 2, dans lequel ledit alcanol est l'éthanol.

**4.** Procédé selon l'une quelconque des revendications 1 à 3, dans lequel ledit magnésium pulvérulent correspond à une ouverture de maille d'environ 50 mesh à environ 200 mesh.

**5.** Procédé qui comprend le fait de :

(i) traiter un monoalkyl(en $C_2$-$C_5$)cyclopentadiène avec du trichlorure de ruthénium hydraté et du magnésium pulvérulent,
ledit traitement étant mis en oeuvre en présence d'éthanol et ledit traitement ayant lieu à une température entre 0 °C et -30 °C pour obtenir un premier mélange réactionnel ;
(ii) agiter ledit premier mélange réactionnel à une température entre environ 10 °C et 15°C pendant un laps de temps approprié pour amener la réaction à son terme,
pour obtenir un deuxième mélange réactionnel comprenant une suspension de ruthénocène en $C_2$-$C_5$ ;
(iii) filtrer ledit deuxième mélange réactionnel pour obtenir un gâteau de filtre comprenant un ruthénocène en $C_2$-$C_5$; et
(iv) recristalliser ledit ruthénocène en $C_2$-$C_5$ présent dans ledit gâteau de filtre ;
pour obtenir un produit de ruthénocène purifié en $C_2$-$C_5$.

**6.** Procédé selon la revendication 5, dans lequel ledit monoalkyl(en $C_2$-$C_5$) cyclopentadiène de l'étape (i) et de l'éthylcyclopentadiène et dans lequel ledit ruthénocène en $C_2$-$C_5$ des étapes (ii), (iii) et (iv) est l'éthylruthénocène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6002036 A
- EP 86457 A